# EUROPEAN PATENT SPECIFICATION

(11) **EP 4 425 668 B1**
(45) Date of publication and mention of the grant of the patent: **08.04.2026**
(21) Application number: 23816238.2
(22) Date of filing: 04.05.2023
(51) Int. Cl.: H01M 50/251, H01M 50/289, H01M 50/244, H01M 50/204, H01M 50/24, H01M 50/209

(54) **BATTERY CONTAINER AND ENERGY STORAGE SYSTEM INCLUDING THE SAME**
BATTERIEBEHÄLTER UND ENERGIESPEICHERSYSTEM DAMIT
RÉCIPIENT DE BATTERIE ET SYSTÈME DE STOCKAGE D'ÉNERGIE LE COMPRENANT

(30) Priority: 03.06.2022 KR 20220068540
(43) Date of publication of application: 04.09.2024
(60) Divisional application: 26162125.4
(73) Proprietor: LG Energy Solution, Ltd., Seoul 07335 (KR)
(72) Inventor: CHOI, Byung-Hyuk, Daejeon 34122 (KR); PARK, Jung-Beom, Daejeon 34122 (KR); MUN, Jeong-O, Daejeon 34122 (KR); LEE, Seung-Jun, Daejeon 34122 (KR); CHO, Tae-Shin, Daejeon 34122 (KR)
(74) Representative: Plasseraud IP
(86) International application number: PCT/KR2023/006115
(87) International publication number: WO 2023/234574

(56) References cited:
- WO-A1-2019/020788
- CN-A- 110 127 253
- CN-A- 112 366 391
- CN-U- 212 934 776
- KR-A- 20170 082 817
- KR-A- 20220 001 228
- US-A1- 2012 263 989

## Description

### TECHNICAL FIELD

The present application claims priority to Korean Patent Application No. 10-2022-0068540 filed on June 3, 2022 in the Republic of Korea.

The present disclosure relates to a battery, and more specifically, to a battery container configured to store energy by accommodating a plurality of battery modules in a container-shaped housing, and an energy storage system including the same.

### BACKGROUND ART

Recently, as issues such as power shortage or eco-friendly energy have emerged, an energy storage system (ESS) for storing generated power has been attracting much attention. Representatively, when such an ESS is used, it is easy to construct a power management system such as a smart grid system, and it is possible to easily control power supply and demand in a specific region or city. In addition, as commercialization of electric vehicles is in full swing, such an ESS can be applied to electric charging stations capable of charging electric vehicles.

The ESS may be configured in various forms, but may be typically configured to include at least one battery container. At this time, the battery container may include a plurality of battery modules connected in series and/or parallel to each other. Moreover, the battery container used in the ESS may include a large number of battery modules therein to increase capacity or output. Also, a plurality of battery modules may be stacked in the upper and lower direction. At this time, in order to maintain the stacked state of the battery modules, the conventional battery container often includes a rack frame. That is, the conventional battery container includes a separate rack frame designed to accommodate a plurality of battery modules in the container housing, and the battery modules may be accommodated in the rack frame.

However, the conventional battery container has a problem in that the weight of the battery container increases significantly due to the rack frame for maintaining the stacked state of the battery modules. In other words, in the conventional battery container, the container housing itself weighs a lot, and the rack frame accommodated therein also weighs a lot. Therefore, when the battery modules are accommodated, the weight of the entire battery container may be very high. In this case, great difficulty may arise in transporting the battery container, and transportation costs may also be high. Therefore, the cost competitiveness of the battery container may decrease. Also, in this case, the process of installing the battery container may be very difficult.

Moreover, in the case of a conventional battery container, the size of the battery container may increase due to the space occupied by the rack frame. If the size of the battery container increases in this way, there may be significant limitations in transporting and installing the battery container. In addition, in this case, the space where the battery modules can be accommodated inside the battery container may be reduced due to the rack frame, so the energy density of the battery container may decrease. An example of a transportable stationary enclosure for storing electrical energy storage modules can be found in WO 2019/020788 A1. An example of a rack housing assembly can be found in US 2012/263989 A1.

### DISCLOSURE

### Technical Problem

The present disclosure is designed to solve the problems of the related art, and therefore the present disclosure is directed to providing a battery container that is easy to optimize size and weight, and an energy storage system including the same.

However, the technical problem to be solved by the present disclosure is not limited to the above, and other problems not mentioned herein will be clearly understood by those skilled in the art from the following disclosure.

### Technical Solution

According to the invention, there is provided a battery container according to claim 1.

In addition, the support member may be provided in plurality inside the container housing so that the plurality of support members are arranged to be spaced apart by a predetermined distance in the horizontal direction, and one module stack may be interposed between two adjacent support members.

In addition, the seating portion may be provided in plurality so that the plurality of seating portions are spaced apart by a predetermined distance in the upper and lower direction.

In addition, the seating portion may be configured in a bent plate shape.

In addition, the pillar portion may have a hollow formed therein.

In addition, the plate portion may include two plates spaced apart from each other.

In addition, the pillar portion may have an insert groove formed so that the seating portion is inserted and coupled therein.

In another aspect of the present disclosure, there is also provided an energy storage system, comprising the battery container according to the present disclosure.

### Advantageous Effects

According to an embodiment of the present disclosure, the weight of the battery container may be effectively reduced.

Therefore, the battery container may be transported and installed more easily. Moreover, according to this embodiment of the present disclosure, the effort and cost required to transport the battery may be reduced, thereby improving cost competitiveness.

In addition, according to an embodiment of the present disclosure, during the process of lifting or lowering the battery container, the possibility of the battery container being damaged may be effectively reduced.

In addition, according to an embodiment of the present disclosure, since the size of the battery container may be reduced, restrictions in transporting or installing the battery container may be reduced. For example, according to this embodiment, more battery containers may be loaded on transportation equipment such as ships or vehicles.

In addition, according to an embodiment of the present disclosure, as the inner space of the battery container increases, energy density may be increased higher.

In addition, according to an embodiment of the present disclosure, material costs used in manufacturing the battery container may be reduced.

In addition, several other additional effects may be achieved by various embodiments of the present disclosure. Various effects of the present disclosure will be described in detail in each embodiment, or the effects that can be easily understood by those skilled in the art will be not be described in detail.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a perspective view schematically showing a partial configuration of a battery container according to an embodiment of the present disclosure.
FIG. 2 is a perspective view schematically showing the configuration in which the battery module is removed in the embodiment of FIG. 1.
FIG. 3 is an enlarged view showing a partial configuration of the battery container according to an embodiment of the present disclosure.
FIG. 4 is an exploded perspective view showing the configuration of FIG. 3 separately.
FIG. 5 is an enlarged view showing a partial configuration of FIG. 4.
FIG. 6 is a perspective view schematically showing a seating portion according to another embodiment of the present disclosure.
FIG. 7 is a perspective view schematically showing a seating portion according to still another embodiment of the present disclosure.
FIG. 8 is a cross-sectional view, taken along line C1-C1' in FIG. 3.
FIG. 9 is an enlarged view showing a partial configuration of a battery container according to another embodiment of the present disclosure.
FIG. 10 is an exploded perspective view showing the configuration of FIG. 9.
FIG. 11 is a cross-sectional view, taken along line C2-C2' in FIG. 9.
FIG. 12 is an exploded perspective view schematically showing a partial configuration of a battery container according to another embodiment of the present disclosure.
FIG. 13 is a cross-sectional view schematically showing a partial configuration of a battery container according to still another embodiment of the present disclosure.
FIG. 14 is a top cross-sectional view schematically showing a partial configuration of the battery module according to an embodiment of the present disclosure, as viewed from the above.
FIG. 15 is a top cross-sectional view schematically showing a partial configuration of a battery module according to another embodiment of the present disclosure, as viewed from the above.
FIG. 16 is an enlarged view of the portion J1 in FIG. 15.
FIG. 17 is a perspective view schematically showing a partial configuration of a support member according to still another embodiment of the present disclosure.
FIG. 18 is a perspective view schematically showing a partial configuration of a support member according to still another embodiment of the present disclosure.
FIG. 19 is an exploded perspective view schematically showing the configuration of a battery container according to still another embodiment of the present disclosure.
FIG. 20 is a diagram schematically showing a partial configuration of a battery container according to still another embodiment of the present disclosure.
FIG. 21 is a diagram schematically showing a partial configuration of a support member according to still another embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

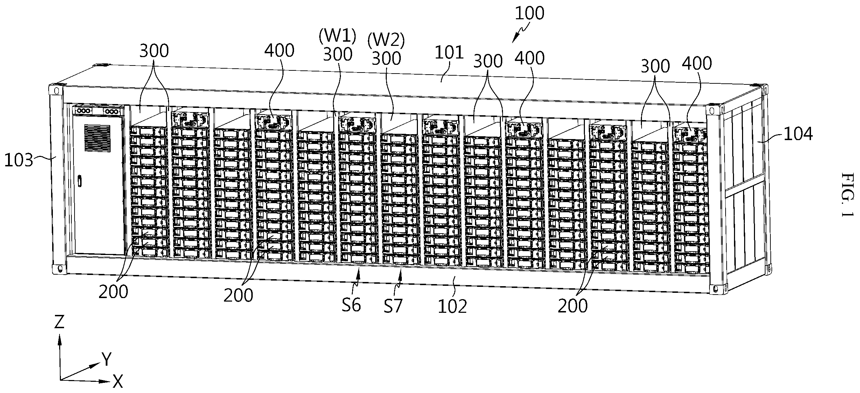

FIG. 1 is a perspective view schematically showing a partial configuration of a battery container according to an embodiment of the present disclosure.

Referring to FIG. 1, the battery container according to the present disclosure includes a container housing 100, a battery module 200, and a support member 300.

The container housing 100 may include a plurality of unit housings. Also, an empty space may be formed inside by the unit housing. Also, through the inner space formed in this way, various components may be stored and protected. At least some of the plurality of unit housings may be configured in an integrated form. That is, at least some of the plurality of unit housings may not be manufactured separately and then assembled, but may be manufactured in an integrated form from the beginning.

The container housing 100 is an exterior of the battery container and may be made of a material and structure with high rigidity to protect various components stored in the inner space, especially the battery module 200. For example, the container housing 100 may be made of a metal material such as steel.

However, the present disclosure is not necessarily limited to a specific form or material of the container, and various container housings 100 known at the time of filing of this application may be employed in the present disclosure.

The battery module 200 may be stored in the inner space of the container housing 100. In particular, a plurality of battery modules 200 may be included in the battery container to increase capacity and/or output. In addition, the plurality of battery modules 200 may be electrically connected in series and/or parallel through connection members such as bus bars or cables.

At least some of the plurality of battery modules 200 may be stacked in the upper and lower direction to form a module stack. In other words, the module stack may be regarded as a configuration formed by stacking two or more battery modules 200 in the upper and lower direction (Z-axis direction in the drawing). For example, thirteen battery modules 200 may be stacked in the upper and lower direction to form one module stack.

In addition, a plurality of module stacks may be arranged in the horizontal direction. In other words, the plurality of battery modules 200 may be divided into several groups, and a separate module stack may be formed for each group. Also, the plurality of module stacks may be arranged in the horizontal direction. For example, referring to FIG. 1, the battery container may include fourteen module stacks, and the fourteen module stacks may be arranged to be spaced apart by a predetermined distance in the left and right direction (X-axis direction in the drawing). At this time, each module stack may include thirteen battery modules 200. However, the number of stacked battery modules 200 or the number of module stacks arranged in the horizontal direction may be set in various ways depending on various conditions or situations, such as the specifications or installation purpose of the battery container, specifications, characteristics or type of the battery module 200, etc.

The support member 300 may be configured to support at least two unit housings therebetween. That is, the container housing 100 may include a plurality of unit housings, and the support member 300 may be provided between at least some of the unit housings and configured to support the unit housings. In particular, the support member 300 may be configured to secure or supplement the structural rigidity of the container housing 100 to a certain level by supporting the unit housings therebetween. In particular, the support member 300 may function as a post inside the container housing 100. In this case, the support member 300 may also be referred to as a support post.

In addition, the support member 300 may be configured to accommodate the plurality of battery modules 200. In particular, the plurality of battery modules 200 may be stacked in the upper and lower direction to form a module stack, and the support member 300 may be configured to stably maintain the stacked state and position of the module stack. The support member 300 may be made of a high-strength metal material such as steel to ensure excellent mechanical strength.

According to this embodiment of the present disclosure, the structural rigidity of the container housing 100 may be secured by the support member 300, while the battery modules 200 may be stored stably. In particular, according to this embodiment, there is no need to additionally provide a rack frame or the like, which has been separately installed inside the container housing 100 to store the battery modules 200 in a conventional battery container. Therefore, the weight or size of the battery container may be reduced and energy density may be improved. In addition, according to this embodiment of the present disclosure, the cost or effort required to manufacture, transport, or install the battery container may be reduced, thereby improving cost competitiveness and installation quality.

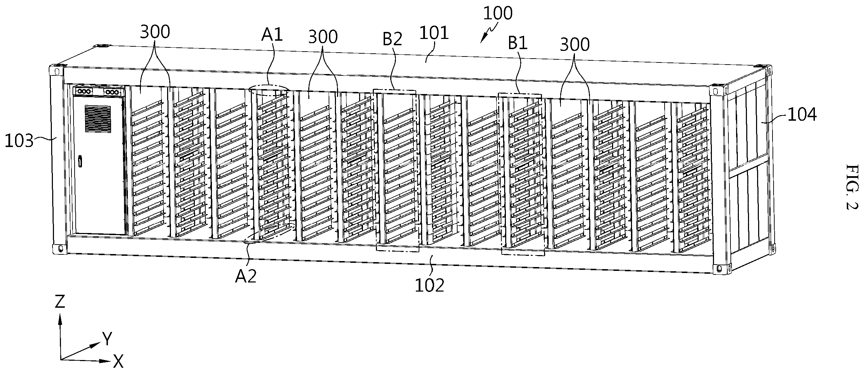

FIG. 2 is a perspective view schematically showing the configuration in which the battery module 200 is removed in the embodiment of FIG. 1.

Referring to FIGS. 1 and 2, the container housing 100 may include an upper housing 101 and a lower housing 102 as the plurality of unit housings. The upper housing 101 may be configured to seal the upper portion with respect to the inner space of the container housing 100. Accordingly, the inner surface, namely the lower surface, of the upper housing 101 may constitute the ceiling of the container housing 100. In addition, the lower housing 102 may be configured to seal the lower portion with respect to the inner space of the container housing 100. Accordingly, the inner surface, namely the upper surface, of the lower housing 102 may constitute the bottom of the container housing 100. In particular, the upper housing 101 and the lower housing 102 may be configured in a plate shape, respectively.

In this configuration, the support member 300 may be configured to support the upper housing 101 and the lower housing 102 therebetween. In particular, the upper end of the support member 300 may be coupled and fixed to the upper housing 101, as indicated by A1. In addition, the lower end of the support member 300 may be coupled and fixed to the lower housing 102, as indicated by A2. Moreover, at least a part of the support member 300 may be manufactured to be integrated with the upper housing 101 and the lower housing 102 from the beginning. Alternatively, the support member 300 may be manufactured separately from the upper housing 101 and the lower housing 102 and then coupled and fixed thereto during the assembly process using various other fastening methods such as bolting or welding.

According to this embodiment of the present disclosure, the upper housing 101 and the lower housing 102 may be supported by support member 300. In particular, according to this embodiment, the problem of the upper housing 101 sagging downward may be prevented. Additionally, according to this embodiment, the support member 300 may be formed to be elongated from the bottom of the inner space of the container housing 100 to the ceiling. Also, from the bottom to the top of this support member 300, the battery module 200 may be seated. Accordingly, the accommodation space of the battery module 200 may be increased. In particular, according to this embodiment, as shown in FIG. 1, battery modules 200 may be stacked high from the bottom to the ceiling of the container housing 100. Therefore, it may be more advantageous to improve the energy density of the battery container.

In addition, as shown in FIG. 2, the container housing 100 may further include a left housing 103 and a right housing 104 along with the upper housing 101 and the lower housing 102. The left housing 103 and the right housing 104 may seal the left and right sides of the inner space of the container housing 100, respectively. Moreover, the left housing 103 and the right housing 104 may also be formed in a plate shape.

In addition, the container housing 100 may further include a front housing and a rear housing. However, in order to show internal components more clearly, FIG. 1 shows a diagram with the front housing and the rear housing being removed. In particular, the container housing 100 may be composed of six unit housings having a plate shape to have a rectangular parallelepiped shape. In addition, the front housing and the rear housing may include one or more doors to open the inner space of the container housing 100, or may be entirely configured in the form of a door. In addition, the plurality of unit housings constituting the container housing 100 may have a completely flat surface, but may also have a partially bent or curved shape or may have a reinforcing structure such as a rib or padding structure. For example, a reinforcing member may be provided at the corner or central portion of the container housing 100.

The support member 300 may be included in plurality inside the container housing 100. In particular, as shown in FIGS. 1 and 2, the plurality of support members 300 may be arranged to be spaced apart by a predetermined distance in the horizontal direction, for example the left and right direction (X-axis direction).

At this time, the module stack may be interposed between two adjacent support members 300. For example, in the embodiment of FIG. 1, the module stack S6 may be inserted between W1 and W2, which are two support members 300 arranged adjacently in the left and right direction. At this time, the two support members 300 may support both ends of the module stack interposed between them. More specifically, the two support members 300 may support both ends of the battery module 200 provided in the module stack interposed therebetween in the horizontal direction. For example, in the embodiment of FIG. 1, the support member W1 may support the left lower end of the battery module 200 included in the module stack S6, and the support member W2 may support the right lower end of the battery module 200 included in the module stack S6.

According to this embodiment of the present disclosure, the support performance or structural rigidity of the battery container may be further improved by the plurality of support members 300. In addition, in this case, the plurality of battery modules 200 included in the battery container may be more stably supported only with the support members 300, without any additional components.

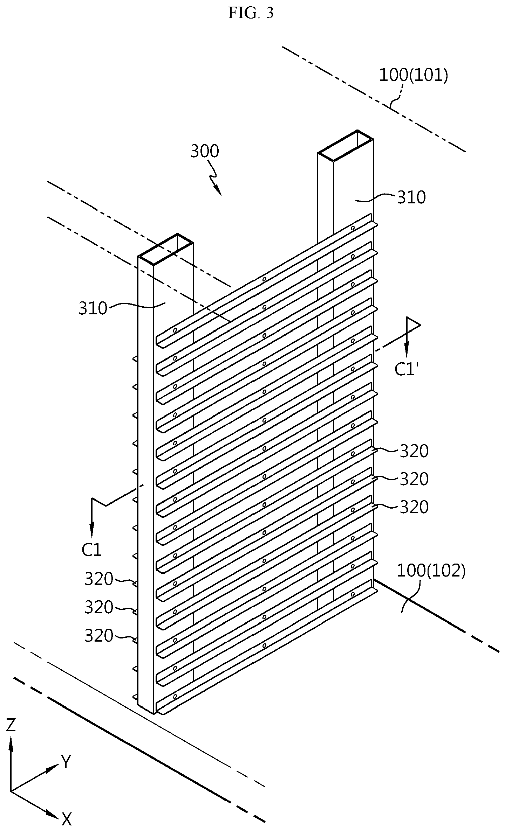

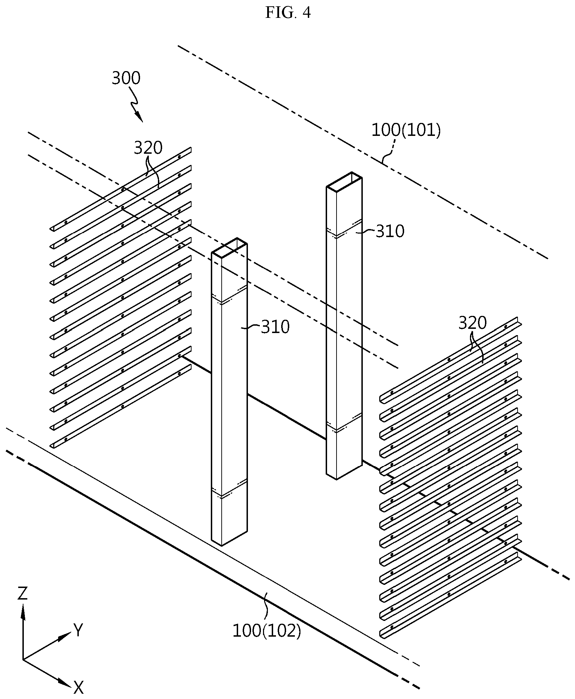

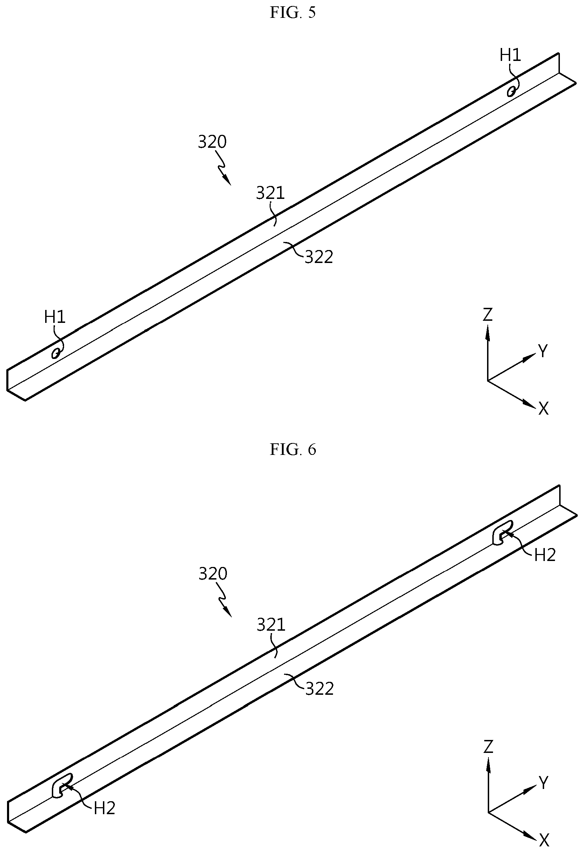

FIG. 3 is an enlarged view showing a partial configuration of the battery container according to an embodiment of the present disclosure. For example, FIG. 3 may be regarded as being an enlarged view of the portion B1 of FIG. 2. Also, FIG. 4 is an exploded perspective view showing the configuration of FIG. 3 separately. Also, FIG. 5 is an enlarged view showing a partial configuration of FIG. 4.

Referring to FIGS. 3 to 5, the support member 300 may include a pillar portion 310 and a seating portion 320.

Here, the pillar portion 310 may be configured in the form of a bar that is elongated in the upper and lower direction and erected. In particular, the upper and lower ends of the pillar portion 310 may be coupled to the container housing 100. For example, the upper and lower ends of the pillar portion 310 may be welded or bolted to the container housing 100. Alternatively, the pillar portion 310 may be manufactured to be integrated with the container housing 100 from the beginning.

Two or more pillar portions 310 may be included in one support member 300. For example, as shown in FIGS. 3 and 4, two pillar portions 310 may be provided in one support member 300. In addition, the two pillar portions 310 may be arranged to be spaced apart from each other by a predetermined distance in the front and rear direction (Y-axis direction).

The seating portion 320 may be configured to be coupled to the pillar portion 310 so that the battery module 200 is seated thereon. In particular, both ends of the seating portion 320 may be and coupled fixed to the two pillar portions 310 by fastening. In addition, the seating portion 320 may support each battery module 200 upward in the module stack. Since the seating portion 320 is configured in the form of a frame or bracket, it may be expressed as a seating frame or a seating bracket.

According to this embodiment of the present disclosure, with a single support member 300, the structure and shape of the container housing 100 and the module stack may be maintained stably and the rigidity may be strengthened. In particular, in this embodiment, the overall shape of the container housing 100 may be maintained and supported by the pillar portion 310, and the stacked state of the battery module 200 may be stably maintained by the support member 300. Therefore, there is no need to include a separate rack frame for maintaining the stacked state of the battery module 200 or a separate reinforcement structure for supporting the container housing 100 in the battery container. In addition, according to this embodiment, the support member 300 has a simple structure and thus may be easily manufactured. Therefore, the manufacturing cost of the battery container may be reduced and assembly and productivity may be improved. In addition, according to this embodiment, since the weight of the battery container is reduced, the battery container may be transported and installed more easily.

The module stack facing one support member 300 may include a plurality of battery modules 200 stacked in the upper and lower direction. Accordingly, the support member 300 may include a plurality of seating portions 320 to support the plurality of battery modules 200 stacked in this way, respectively. Moreover, as shown in FIGS. 3 and 4, the seating portion 320 may be provided in plurality along the stacking direction of the battery module 200, to be spaced apart from each other by a predetermined distance in the upper and lower direction. At this time, both ends of the plurality of seating portions 320 arranged in the upper and lower direction may be fastened to the pillar portion 310 through a fastening hole as indicated by H1 in FIG. 5.

Therefore, the stacked state of the module stack in which a plurality of battery modules 200 are stacked in the upper and lower direction may be maintained more stably. In addition, the configuration for maintaining the stacked state of the module stack may be more easily implemented.

In addition, in one support member 300, module stacks may be located on both sides. For example, in the embodiment of FIG. 1, different module stacks S6 and S7 may be located at the left and right sides of one support member W1, respectively. Accordingly, one support member 300 may include a plurality of seating portions 320 at both left and right sides, respectively, as shown in FIG. 4. Therefore, with one support member 300, a plurality of battery modules 200 located at both left and right sides may be supported together.

The portion seating 320 may be configured in the form of a bent plate, as shown in FIGS. 3 to 5.

In particular, the seating portion 320 may be configured in the form of a plate elongated in one direction, for example the front and rear direction (Y-axis direction). In addition, the seating portion 320 may be configured to have a central portion bent in the left and right direction. In particular, the seating portion 320 may be bent toward the battery module. For example, when the battery module 200 is located at the right side of the seating portion 320, the lower end of the seating portion 320 may be bent in the right direction. Moreover, as shown in FIGS. 4 and 5, the seating portion 320 may be configured to have a central portion bent at approximately 90°.

More specifically, the seating portion 320 may include a vertical part 321 and a horizontal part 322 based on the bent portion. Here, the vertical part 321 and the horizontal part 322 are configured in a plate shape, respectively, but may have an integrated form. Moreover, the vertical part 321 may be configured in the form of an erect plate and coupled to the pillar portion 310. For example, the vertical part 321 may have a fastening hole as indicated by H1 in FIG. 5 and be fastened to the pillar portion 310 by bolting. In addition, the horizontal part 322 may be configured in the form of a laid-down plate and support the battery module 200 seating on the upper surface upward.

The seating portion 320 may support the side lower edge of the battery module 200. For example, the seating portion 320 may support the left lower edge of the battery module 200. In this case, the right lower edge of the corresponding battery module 200 may be supported by another seating portion 320, for example a seating portion 320 included in another support member 300. In other words, based on one battery module 200, it may be regarded that two seating portions 320 support both sides of the battery module 200, especially the left lower and right lower ends, respectively.

According to this embodiment, the seating portion 320 that stably supports the battery module 200 and is fastened and fixed to the pillar portion 310 may be easily implemented. In addition, in this case, since the seating portion 320 may be easily manufactured and installed, productivity and workability may be improved.

FIG. 6 is a perspective view schematically showing a seating portion 320 according to another embodiment of the present disclosure. For various embodiments included in this specification, including this embodiment, features identical or similar to those of other embodiments will not be described in detail, and different features will be described in detail.

Referring to FIG. 6, a hook hole as indicated by H2 may be formed in the seating portion 320. The hook hole H2 may be configured such that a hook of the pillar portion 310 may fit therein. That is, the pillar portion 310 may have a hook (not shown) and be coupled to the hook hole H2 of the seating portion 320 by hooking. In particular, the hook hole H2 of the seating portion 320 may be formed not only in the vertical part 321 but also in the horizontal part 322, as shown in FIG. 6. In addition, the hook hole H2 of the seating portion 320 may be formed to be long in the vertical part 321 and may have a bent portion. More specifically, the hook hole H2 formed in the vertical part 321 may be elongated in the upper direction (+Z-axis direction) from the bent portion in contact with the horizontal part 322, and then be bent in the horizontal direction (Y-axis direction) and be elongated to a predetermined length.

According to this embodiment of the present disclosure, the process of coupling the seating portion 320 with the pillar portion 310 may be performed more easily. Therefore, the battery container may be assembled more efficiently. In addition, according to this embodiment, the pillar portion 310 and the seating portion 320 may be coupled and fixed more easily.

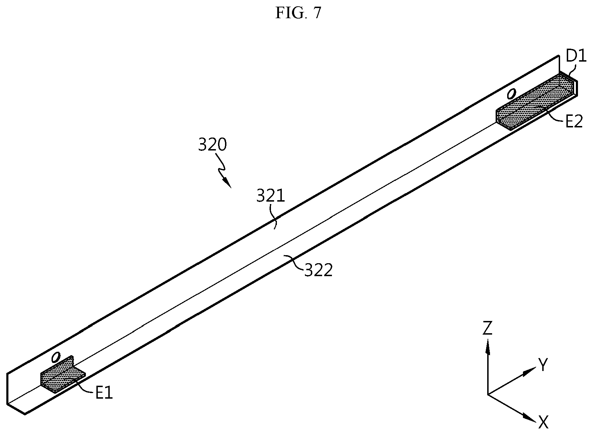

FIG. 7 is a perspective view schematically showing a seating portion 320 according to still another embodiment of the present disclosure.

Referring to FIG. 7, the seating portion 320 may include elastic members, as indicated by E1 and E2. In particular, the elastic members E1 and E2 may be attached to the upper surface of the horizontal part 322. The elastic members E1 and E2 may be made of an elastic material such as rubber, silicone, or polyurethane. In addition, the elastic members E1 and E2 may have electrical insulation properties. The elastic members E1 and E2 may reduce the transmission of external shock or vibration to the battery module 200 through the pillar portion 310 and the seating portion 320 since the battery module 200 seats directly thereon. In addition, the elastic members E1 and E2 may ensure electrical insulation between the main body of the seating portion 320 and the battery module 200. Moreover, the main body of the seating portion 320 may be made of a conductive material such as metal like steel to ensure rigidity. At this time, the elastic members E1 and E2 may prevent a leakage current or the like from flowing from the battery module 200 to the main body of the seating portion 320.

The elastic members E1 and E2 may have a bent shape, as shown in FIG. 7. In particular, the elastic members E1 and E2 may be bent from the upper surface of the horizontal part 322 to the inner surface of the vertical part 321. In addition, the seating portion 320 may have a rear end bent upward, as indicated by D1 in FIG. 7. The rear bent portion D1 may function as a stopper to prevent the battery module 200 from moving further rearward when it is accommodated in the support member 300. At this time, the elastic members E1 and E2 may be bent to be also located on the inner surface of the rear bent portion D1 of the seating portion 320.

According to this embodiment of the present disclosure, the effect of absorbing impact or vibration and securing electrical insulation may be further improved by the elastic members E1 and E2.

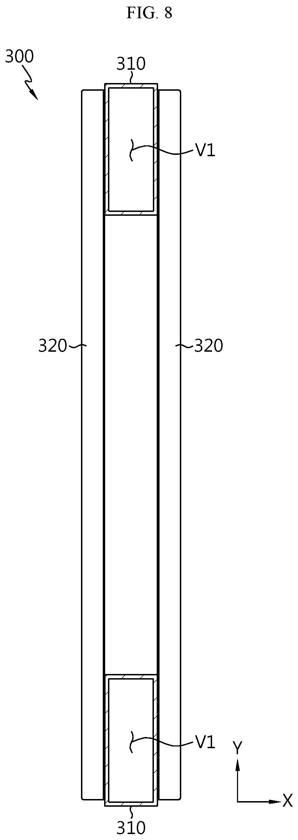

FIG. 8 is a cross-sectional view, taken along line C1-C1' in FIG. 3.

Referring to FIG. 8, the pillar portion 310 may have a hollow, as indicated by V1. In particular, the pillar portion 310 may be elongated in the upper and lower direction, and the hollow V1 formed therein may also have a shape elongated in the upper and lower direction.

According to this embodiment of the present disclosure, the weight of the battery container may be reduced. Therefore, the battery container may be transported and installed more easily. In addition, according to this embodiment, the material used for the pillar portion 310 is reduced, so manufacturing costs may be further reduced.

Furthermore, the pillar portion 310 may be provided in plurality in the horizontal direction, for example in the left and right direction (X-axis direction), along which the module stacks are arranged. At this time, a hollow V1 may be formed in each of the plurality of pillar portions 310 arranged in the left and right direction, and at least two pillar portions 310 may be configured to have hollows V1 of different sizes.

In particular, among the plurality of pillar portions 310 arranged in the left and right direction, the hollow V1 of a pillar portion 310 located in the outer portion may be configured to have a larger hollow size than the hollow V1 of a pillar portion 310 located in the central portion. At this time, the plurality of pillar portions 310 arranged in the left and right direction may have the same external size. Therefore, it may be regarded that the hollow V1 of the pillar portion 310 located in the central portion has a greater tube (pipe) thickness than the hollow V1 of the pillar portion 310 located in the outer portion.

According to this embodiment of the present disclosure, the pillar portion 310 located in the outer portion may contribute to reducing the overall weight of the battery container by increasing the hollow V1 and reducing the thickness. In addition, the pillar portion 310 located in the central portion may prevent the container housing 100, especially the central portion of the upper housing 101, from sagging downward by reducing the hollow V1 and increasing the thickness. Therefore, in this case, it is possible to achieve all of the effects of reducing the weight of the battery container and securing structural rigidity to a certain level or above.

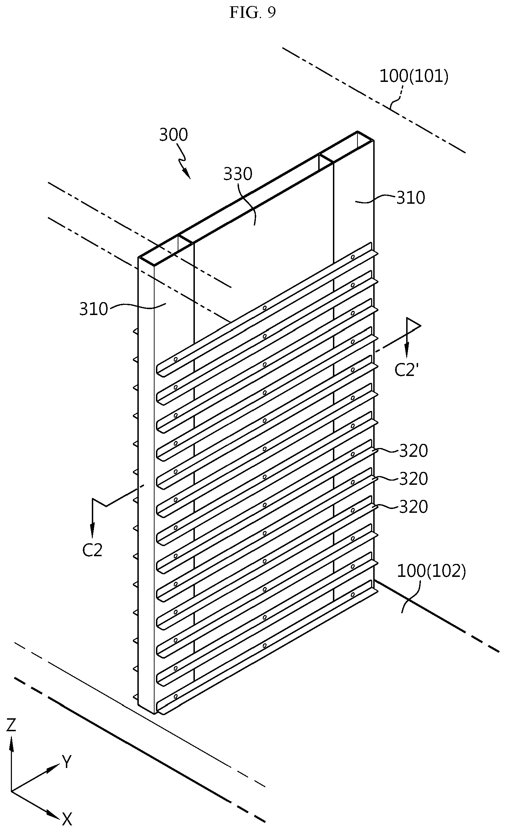

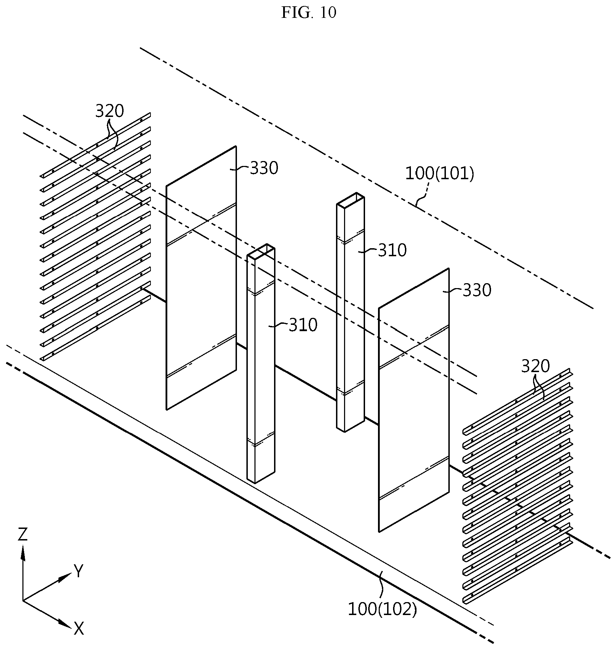

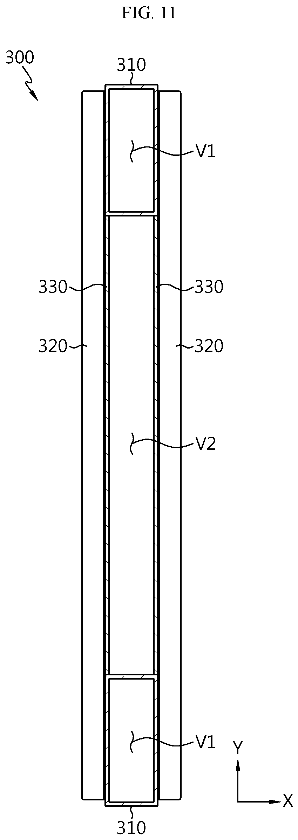

FIG. 9 is an enlarged view showing a partial configuration of a battery container according to another embodiment of the present disclosure. For example, FIG. 9 may be regarded as being an enlarged view of the portion B2 of FIG. 2. Also, FIG. 10 is an exploded perspective view showing the configuration of FIG. 9, and FIG. 11 is a cross-sectional view, taken along line C2-C2' in FIG. 9.

Referring to FIGS. 9 to 11, the support member 300 may further include a plate portion 330. The plate portion 330 may be connected between the two pillar portions 310. In particular, within one support member 300, two pillar portions 310 may be arranged to be spaced apart by a predetermined distance in the front and rear direction (Y-axis direction). At this time, the front end of the plate portion 330 may be fixed to the pillar portion 310 at the front side, and the rear end may be fixed to the pillar portion 310 at the rear side.

The plate portion 330 may be configured to block the space between the two pillar portions 310. For example, seeing the embodiment of FIG. 11, an empty space may be formed between the two pillar portions 310, as indicated by V2. At this time, the plate portion 330 may block substances from moving into the space between the two pillar portions 310.

In particular, the plate portion 330 may be configured in a substantially plate shape to have two flat surfaces. In addition, the plate portion 330 may be interposed between two adjacent module stacks so that both surfaces are erected to face different module stacks. For example, when module stacks are located at the left and right sides of the support member 300, both surfaces of the plate portion 330 may be located at the left and right sides. Accordingly, the left surface of the plate portion 330 may face the left module stack, and the right surface of the plate portion 330 may face the right module stack.

Meanwhile, the plate portion 330 may have an overall plate shape. However, the present disclosure is not necessarily limited to this form. For example, the plate portion 330 may have a partially curved surface or may be formed with irregularities, protrusions, or the like.

According to this embodiment of the present disclosure, material movement between module stacks disposed at both sides of the support member 300 may be blocked or suppressed. In particular, according to this embodiment, the plate portion 330 is provided to the support member 300 along with the pillar portion 310, so that it is possible to effectively block flame or the like from moving between the module stacks located at both sides. Therefore, in this case, the problem of flame spreading among the plurality of module stacks included inside the battery container may be reduced, or the propagation speed may be delayed. To ensure such flame blocking performance, the plate portion 330 may be made of a material with a high melting point and strength, such as steel. In addition, the plate portion 330 may further have a material such as ceramic or mica to improve flame blocking performance.

In particular, the battery container may include a plurality of battery systems. Here, each battery system may include a plurality of module stacks arranged in the horizontal direction. For example, one battery system may have two module stacks arranged adjacent to each other. Here, the plate portion 330 may be included in the support member 300 interposed between different battery systems. For example, when one battery system includes two module stacks, the plate portion 330 may be disposed to each of two module stacks.

In this case, in the same battery system, even if the support member 300 exists, the plate portion 330 is not applied, and thus air or the like may circulate with the support member 300 interposed therein. In particular, one battery system may utilize the same air conditioning module, such as HVAC. Therefore, with one air conditioning module, air may be circulated between different module stacks. Meanwhile, since the plate portion 330 is applied to the support member 300 between different battery systems, flame transfer between different battery systems may be reliably blocked.

The plate portion 330 may include two plates. In particular, referring to FIGS. 10 and 11, each support member 300 may include two plate portions 330. The two plate portions 330 may be arranged to face each other in the horizontal direction (X-axis direction) along which a plurality of module stacks are arranged. Moreover, the two plate portions 330 may be spaced apart from each other by a predetermined distance. That is, the two plate portions 330 may be spaced apart from each other by a predetermined distance in the X-axis direction. Accordingly, an empty space as indicated by V2 in the drawing may be formed between the two plate portions 330.

According to this embodiment of the present disclosure, the two plate portions 330 may form a flame blocking space doubly as a part of the support member 300. In addition, since the two plate portions 330 are not integrated, heat transfer between the two plate portions 330 may be suppressed. Moreover, when the two plate portions 330 are spaced apart from each other and an empty space is formed therebetween, the insulation effect between the two plate portions 330 may be further improved due to an air layer. Moreover, despite the flame blocking performance, the weight of the support member 300 may not increase significantly. Therefore, the overall weight of the battery container may be reduced, which may be more advantageous for transportation or installation of the battery container.

In addition, according to this embodiment, the deformation of the plate portion 330 may be absorbed due to the empty space V2 formed between the two plate portions 330. In particular, if gas or fire occurs in a specific module stack, internal pressure may increase in the space where the module stack is stored. Also, due to this increase in internal pressure, pressure may be applied to the plate portion 330 directly facing the module stack. At this time, the corresponding plate portion 330 may be pushed to a portion where the empty space as indicated by V2 in FIG. 11 is formed. Therefore, the position of the entire support member 300 may be maintained as is. In addition, damage or deformation may not occur in other plate portions 330 provided in the corresponding support member 300. That is, the empty space between the two plate portions 330 may be a space that buffers the deformation of the plate portion 330 due to an increase in internal pressure.

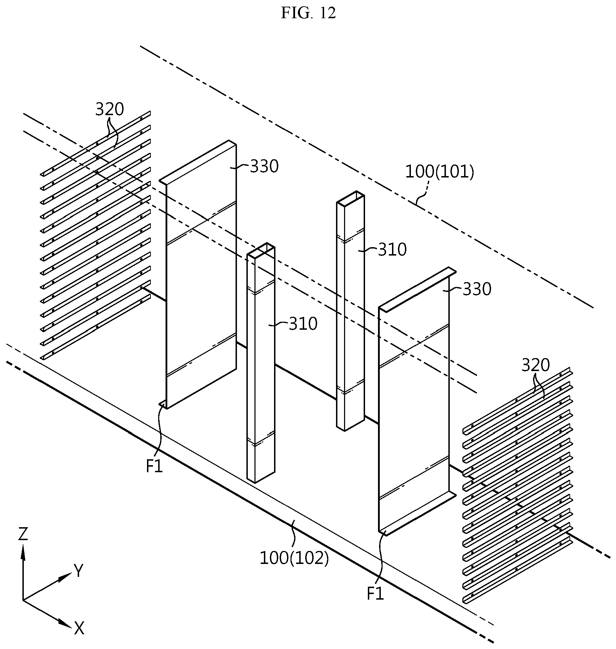

FIG. 12 is an exploded perspective view schematically showing a partial configuration of a battery container according to another embodiment of the present disclosure. Moreover, FIG. 12 may be regarded as showing a modification of the support member 300, particularly the plate portion 330, in the embodiment of FIG. 10.

Referring to FIG. 12, in the support member 300, the plate portion 330 may be configured to have a bent end, as indicated by F1. More specifically, the plate portion 330 may be configured to have a lower end bent as shown in FIG. 12. Also, the lower bent end may contact the inner surface of the lower side, namely the bottom, of the container housing 100. Moreover, the lower surface of the lower bent end of the plate portion 330 may be fixed to the upper surface of the lower housing 102. In addition, the upper end of the plate portion 330 may also be configured in a bent shape. In this case, the upper bent end of the plate portion 330 may be fixed in contact with the inner surface of the upper housing 101, namely the ceiling of the container housing 100.

According to this embodiment of the present disclosure, the sealing force between the plate portion 330 and the container housing 100 may be further improved due to the upper and/or lower bent end formed in the plate portion 330. Therefore, it is possible to more reliably prevent flame or gas from leaking due to the gap between the plate portion 330 and the container housing 100. In addition, according to this embodiment, the contact area between the plate portion 330 and the container housing 100 increases, so that the structural rigidity supplement or support effect for the container housing 100 by the plate portion 330 may be further increased.

Moreover, as in the former embodiment, when two plate portions 330 are provided in one support member 300, the bending direction of each plate portion 330 may be the outer direction of the support member 300. For example, if two plates (left plate and right plate) are provided in one support member 300, the upper and lower ends of the left plate may be bent in the left direction, and the upper and lower ends of the right plate may be bent in the right direction. In this case, in one support member 300, the gap between the ends of the two plates and the container housing 100 may be formed longer. Therefore, the sealing performance according to the bending shape may be further increased.

In addition, according to this embodiment, a space in which various components may be accommodated may be provided between the two plate portions 330 in one support member 300. For example, the support member 300 may store a fire extinguishing agent for extinguishing fire in the empty space V2 between the two plate portions 330. As an extinguishing agent, various fire extinguishing substances known at the time of filing of this application may be employed. In this case, when a fire occurs in a specific module stack, the fire extinguishing agent may be used to extinguish the fire in the specific module stack or prevent the fire from spreading to other adjacent module stacks. In addition, the support member 300 may be configured so that, when a fire occurs in a specific module stack, the fire extinguishing agent exists only in the empty space V2 between the two plate portions 330 or flows out from the space and leaks toward the module stack. At this time, a hole through which the fire extinguishing agent may leak may be formed in a portion of the support member 300, for example in the plate portion 330.

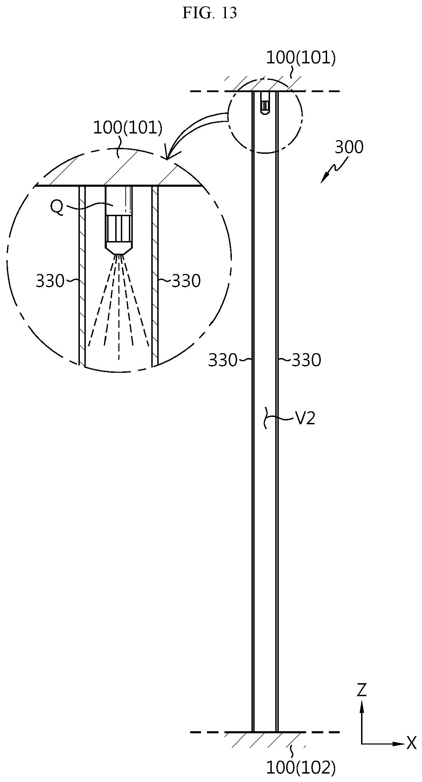

FIG. 13 is a cross-sectional view schematically showing a partial configuration of a battery container according to still another embodiment of the present disclosure.

Referring to FIG. 13, the battery container according to the present disclosure may further include a fire extinguishing liquid supply module. In particular, the fire extinguishing liquid supply module may include a fire extinguishing nozzle inside the support member 300, as indicated by Q. Moreover, the fire extinguishing nozzle Q may be configured to spray a fire extinguishing liquid, such as water, into the space V2 between the two plate portions 330. Here, the fire extinguishing nozzle Q may be located at the upper portion of the space V2 between the two plate portions 330, namely in the upper housing 101, and spray a fire extinguishing liquid downward.

The fire extinguishing nozzle Q may allow a fire extinguishing liquid to be supplied in case a fire occurs in an adjacent module stack. For example, the fire extinguishing nozzle Q is configured in the form of a glass bulb, and may be broken when heat is applied by a flame or the like, so that water is sprayed. In addition, the fire extinguishing liquid supply module may include a fire sensor or a smoke sensor, detect fire through such a sensor, and spray a fire extinguishing liquid through the fire extinguishing nozzle Q.

According to this embodiment of the present disclosure, when thermal runaway or fire occurs in a specific module stack, it is possible to prevent or reduce heat or flame directed to other module stacks beyond the support member 300. Therefore, it is possible to more reliably prevent or delay the spread of fire to the entire battery container. Moreover, in this embodiment, the fire extinguishing liquid, such as water, may be sprayed only inside the support member 300 and may not be sprayed to the battery module 200. Therefore, it is possible to prevent normal use of the battery module 200 from being disabled or problems such as electric shock or short circuit from occurring due to direct contact with the fire extinguishing liquid.

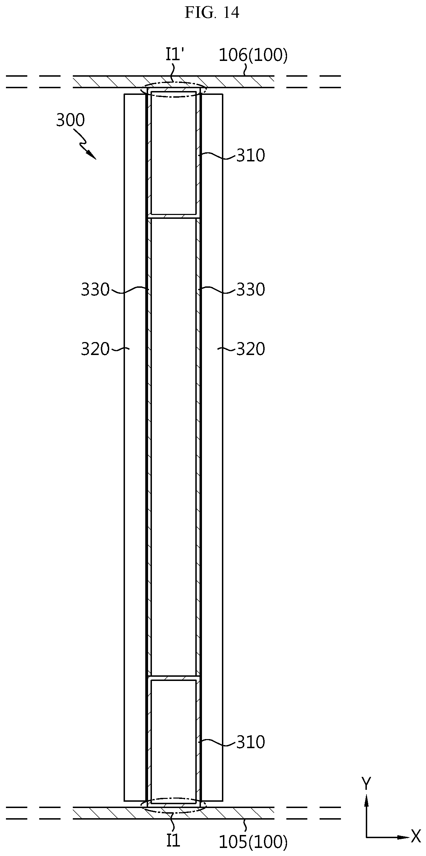

FIG. 14 is a top cross-sectional view schematically showing a partial configuration of the battery module according to an embodiment of the present disclosure, as viewed from the above.

Referring to FIG. 14, the front end and the rear end of the support member 300 may be configured to contact the front inner surface and the rear inner surface of the container housing 100, respectively. For example, in FIGS. 1 and 2, the front housing and the rear housing are not depicted in order to clearly show the internal structure. However, the container housing 100 may include a front housing 105 and a rear housing 106, as shown in FIG. 14, to close the front side and the rear side of the inner space. Moreover, the front housing 105 and/or the rear housing 106 may have a door to open or close the inner space. In addition, an air conditioning module may be installed in the front housing 105 and/or the rear housing 106 for air-conditioning of the container housing 100. For example, HVAC may be installed at the front door of container housing 100.

In this embodiment, the front end of the support member 300 may contact the inner surface of the front housing 105, as indicated by I1 in FIG. 14. In particular, the contact portion between the front end of the support member 300 and the front housing 105 may be formed long continuously from top to bottom. In addition, the rear end of the support member 300 may be in contact with the inner surface of the rear housing 106, as indicated by I1' in FIG. 14. In addition, the contact portion between the rear end of the support member 300 and the rear housing 106 may also be formed long continuously from top to bottom. As a more specific example, the pillar portion 310 may be located at the front end and the rear end of the support member 300. At this time, the front surface of the pillar portion 310 located at the front end may contact the inner surface of the front housing 105. In addition, the rear surface of the pillar portion 310 located at the rear end may contact the inner surface of the rear housing 106.

According to this embodiment of the present disclosure, the flame blocking performance by the support member 300 may be further improved. In other words, according to this embodiment, it is possible to prevent flame or high-temperature venting gas from passing over to the front side or the rear side of the support member 300. Accordingly, the effect of preventing fire spread between module stacks arranged adjacently with the support member 300 interposed therebetween may be further improved.

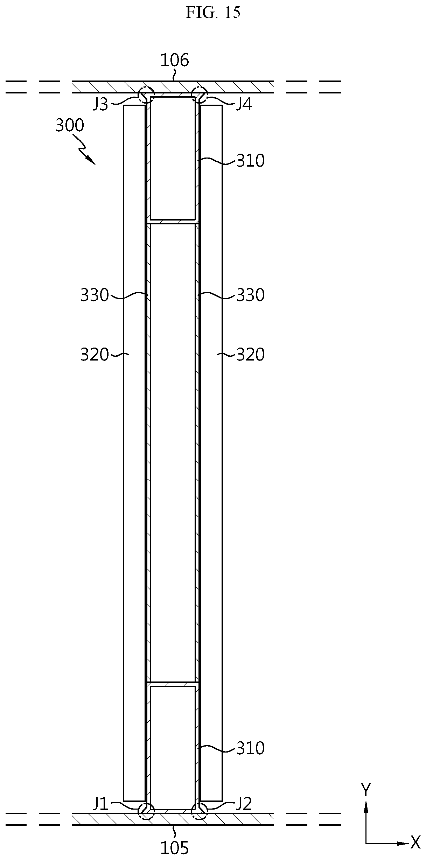

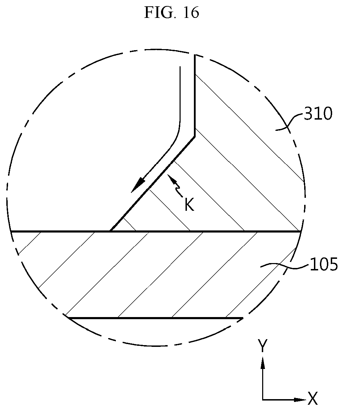

FIG. 15 is a top cross-sectional view schematically showing a partial configuration of a battery module according to another embodiment of the present disclosure, as viewed from the above. Also, FIG. 16 is an enlarged view of the portion J1 in FIG. 15.

First, referring to FIG. 15, the front end and the rear end of the support member 300 may have an inclined surface, as indicated by J1, J2, J3, and J4. In particular, the inclined surface may be configured to have an inward slope in the front and rear direction. Here, the inner direction may mean a direction in which the module stack is stored. For example, referring to FIG. 16, the left side of the front end of the support member 300, especially the left surface of the pillar portion 310 at the front side, may have an inclined surface that is inclined to the left as moving toward the front side (-Y-axis direction), as indicated by K. In addition, in FIG. 15, the right surface of the pillar portion 310 at the front side may have an inclined surface that is inclined to the right as moving toward the front side, as indicated by J2. In addition, in FIG. 15, the left surface of the pillar portion 310 at the rear side may have an inclined surface that is inclined to the left as moving toward the rear side, as indicated by J3. Also, in FIG. 15, the right surface of the pillar portion 310 at the rear side may have an inclined surface that is inclined to the right as moving toward the rear side, as indicated by J4. In particular, in this embodiment, the support member 300, especially the pillar portion 310, may be regarded as being, at least partially, configured in a form where the width gradually increases toward the outer side (front side or rear side), namely the thickness gradually increases.

According to this embodiment of the present disclosure, it is possible to more reliably prevent flame or gas from passing along the front end or the rear end of the support member 300 to other stacks. In particular, according to this embodiment, as indicated by the arrow in FIG. 16, flame or gas may flow to be bent in an inner direction along the inclined surface K. Therefore, while flame or gas is moving along the end of the support member 300, movement to other module stacks beyond the support member 300 may be more reliably blocked. In addition, according to this embodiment, the contact area between the support member 300 and the inner surface of the container housing 100 may be further expanded. Therefore, it is possible to more reliably prevent flame or gas from flowing into the gap between the support member 300 and the inner surface of the container housing 100. In addition, it may be regarded that the effect of supporting the container housing by the support member 300, especially the effect of supporting the front housing 105 and rear housing 106, is further increased.

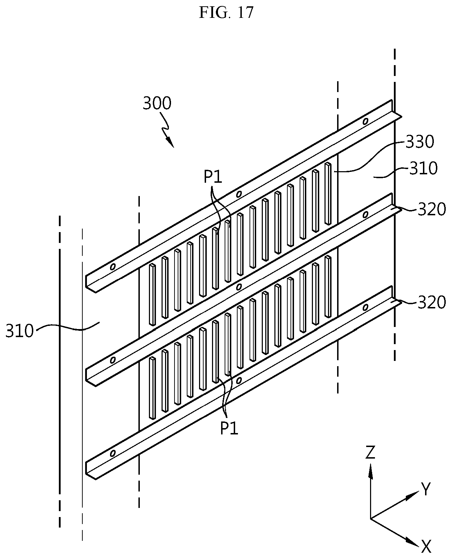

FIG. 17 is a perspective view schematically showing a partial configuration of a support member 300 according to still another embodiment of the present disclosure.

Referring to FIG. 17, irregularities may be formed on the plate portion 330 included in the support member 300. Here, the irregularities may be in the form of protrusions or grooves formed at the plate portion 330. More specifically, as indicated by P1 in FIG. 17, the plate portion 330 may have a protrusion elongated in the vertical direction (Z-axis direction). The protrusion P1 may be configured to protrude in the outer horizontal direction where the battery module 200 is located, for example in the left or right direction. Also, a plurality of protrusions P1 may be arranged in the front and rear direction (Y-axis direction).

According to this embodiment of the present disclosure, when a flame is discharged from a specific battery module 200, the protrusion P1 provided on the plate portion 330 may disturb the flame moving forward and rearward along the surface of the plate portion 330. In particular, since the flame has a strong tendency to travel straightly, the forward and rearward movement of the flame may be suppressed by the plurality of protrusions P1, which are elongated in the vertical direction and arranged the front and rear direction. Therefore, in this case, the flame may be blocked from being discharged to the front or rear side of the battery container.

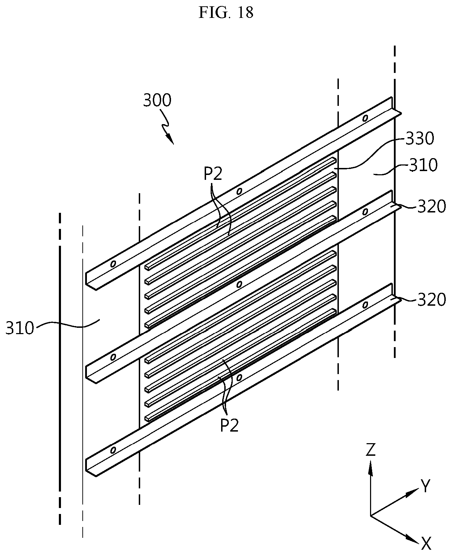

FIG. 18 is a perspective view schematically showing a partial configuration of a support member 300 according to still another embodiment of the present disclosure.

Referring to FIG. 18, the surface of the plate portion 330 included in the support member 300 may have a protrusion elongated in the front and rear direction (Y-axis direction), as indicated by P2. Also, a plurality of protrusions P2 may be arranged in the upper and lower direction in the space between the two seating portions 320 arranged adjacent to each other in the upper and lower direction.

According to this embodiment of the present disclosure, when a flame is discharged from a specific battery module 200, the protrusion P2 provided in the plate portion 330 may disturb the flame moving in the upper and lower direction along the surface of the plate portion 330. Accordingly, the movement of flame to other battery modules 200 stacked at the upper or lower side within the same module stack may be suppressed. Accordingly, in one module stack, the spread of fire between the battery modules 200 may be reduced or delayed.

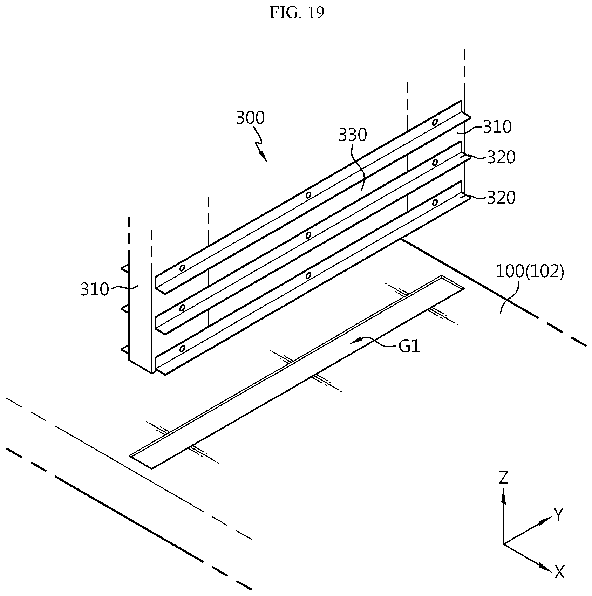

FIG. 19 is an exploded perspective view schematically showing the configuration of a battery container according to still another embodiment of the present disclosure. In particular, Figure 19 may be regarded as showing a state before the lower portion of the support member 300 is coupled with the lower housing 102.

Referring to FIG. 19, an insert groove may be formed on the inner surface of the container housing 100, for example the upper surface (bottom) of the lower housing 102, as indicated by G1. Also, at least a part of the support member 300, such as a lower end, may be configured to be inserted into the first insert groove G1. To this end, the first insert groove G1 of the container housing 100 may have a shape corresponding to the lower end of the support member 300. In particular, the first insert groove G1 of the container housing 100 may be formed long in the front and rear direction (Y-axis direction). In this case, the support member 300 may be inserted long along the first insert groove G1 of the container housing 100.

Meanwhile, in FIG. 19, only the lower portion of the container housing 100 is shown, but the insertion configuration of the support member 300 may also be provided in the upper portion of the container housing 100.

According to this embodiment of the present disclosure, it is possible to more reliably prevent flame or gas from leaking between the support member 300 and the container housing 100. For example, since the lower end of the support member 300 is inserted into the first insert groove G1 formed on the lower housing 102, the flame outflow path between the lower end of the support member 300 and the lower housing 102 is bent, so that the path may be formed longer. Therefore, it is possible to prevent flame or the like from easily moving through the gap between the lower end of the support member 300 and the lower housing 102.

In addition, according to this embodiment, the position of the support member 300 may be stably fixed inside the container housing 100. Also, due to this, the effect of supplementing the rigidity of container housing 100 by the supporting member 300 may be further improved. In addition, according to this embodiment, since the position of the support member 300 is guided by the first insert groove G1, the support member 300 may be installed inside the container housing 100 more easily.

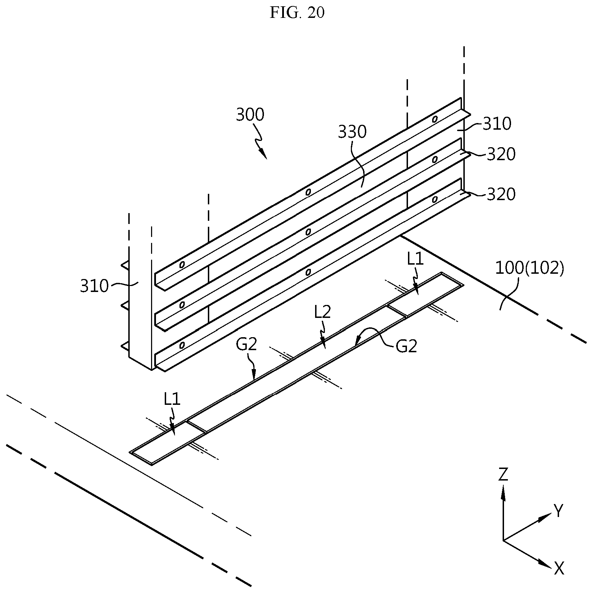

FIG. 20 is a diagram schematically showing a partial configuration of a battery container according to still another embodiment of the present disclosure. FIG. 20 may also be regarded as showing a state before the lower portion of the support member 300 is coupled with the lower housing 102.

Referring to FIG. 20, like the embodiment of FIG. 19, an insert groove as indicated by G2 may be formed on the inner surface of the container housing 100 so that a part of the support member 300 may be inserted. However, in the embodiment of FIG. 20, unlike the embodiment of FIG. 19, a first protruding portion and a second protruding portion, as indicated by L1 and L2, may be provided inside the second insert groove G2. Meanwhile, for convenience of distinction, the insert groove G1 formed in the embodiment of FIG. 19 may be referred to as a first insert groove, and the insert groove G2 formed in the embodiment of FIG. 20 may be referred to as a second insert groove.

In particular, the protruding portions L1 and L2 provided inside the second insert groove G2 may be configured to correspond to the shape of the end of the support member 300. For example, as indicated by V1 in FIGS. 8 and 11, an empty space may be formed in the center of the pillar portion 310 of the support member 300. At this time, the first protruding portion L1 may be inserted into the hollow V1 of the pillar portion 310. In particular, two first protruding portions L1 may be formed in the front and rear direction. Accordingly, the two pillar portions 310 arranged in the front and rear direction in the support member 300 may be inserted into the second insert grooves G2 formed around the two first protruding portions L1 arranged in the front and rear direction, respectively.

In addition, as indicated by V2 in the embodiment of FIG. 11, an empty space may be formed between two plates constituting the plate portion 330 in the support member 300. At this time, the second protruding portion L2 may be inserted into the empty space V2 between the two plate portions 330. Also, the two plates may be regarded as being inserted into the second insert groove G2 formed at the left side and the right side of the second protruding portion L2.

In this embodiment, the fastening force between the support member 300 and the container housing 100 may be further improved. In addition, according to this embodiment, the gap formed between the support member 300 and the container housing 100 may be bent several times. Accordingly, it is possible to more effectively prevent fire or gas from leaking through the gap between the support member 300 and the container housing 100.

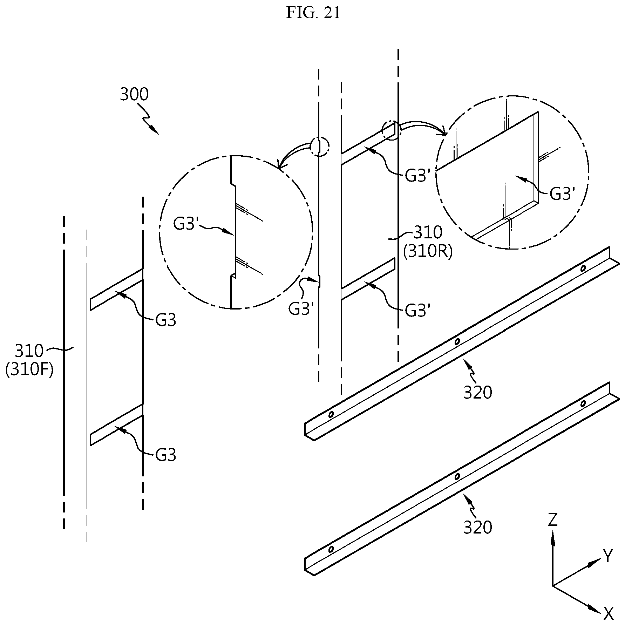

FIG. 21 is a diagram schematically showing a partial configuration of a support member 300 according to still another embodiment of the present disclosure.

Referring to FIG. 21, the pillar portion 310 may have an insert groove, as indicated by G3 and G3', to allow the seating portion 320 to be inserted. The insert groove G3, G3' may be referred to as a third insert groove to distinguish from the former insert grooves G1 and G2. The third insert groove G3, G3' may be configured so that at least a part of the seating portion 320 may be inserted.

For example, as shown in FIG. 21, the third insert groove G3, G3' may be configured to be concave in the horizontal inward direction so that one end of the seating portion 320 is inserted. In particular, in one support member 300, two pillar portions 310 may be arranged in the front and rear direction. In addition, the seating portion 320 may be coupled to the left and right surfaces of each pillar portion 310, respectively.

Accordingly, the third insert groove G3 formed at the right side of the pillar portion 310F at the front side may be formed concave with the right and rear sides open so that the front end of the seating portion 320 may be inserted at the right side. In addition, the third insert groove G3' formed at the right side of the pillar portion 310R at the rear side may be concave with the right and front sides open so that the rear end of the seating portion 320 may be inserted. In addition, the third insert groove G3 formed at the left side of the pillar portion 310F at the front side may be concave with the left and rear sides open so that the front end of the seating portion 320 may be inserted at the left side. In addition, the third insert groove G3' formed at the left side of the pillar portion 310R at the rear side may be concave with the left and front sides open so that the rear end of the seating portion 320 may be inserted.

According to this embodiment of the present disclosure, the fixing force of the seating portion 320 may be greatly improved. In particular, according to this embodiment, the seating portion 320 may be stably supported in the upper direction by the third insert groove G3, G3'. In addition, according to this embodiment, the seating portion 320 may be prevented from moving in the front and rear direction. In addition, according to this embodiment, the assembly position of the seating portion 320 may be guided by the third insert groove G3, G3'. Therefore, in this case, the battery container may be assembled more easily.

In addition to the components described above, the battery container may further include various other components known at the time of filing of this application. For example, the battery container may further include electrical components such as an AC/DC panel. In addition, the battery container may include one or more control modules 400, as shown in FIG. 1. The control module 400 may be configured to control charging and discharging operations of the battery module 200 included in the battery container or to exchange data with other components outside the battery container. In particular, if the battery container includes a plurality of battery systems, a plurality of control modules 400 may be provided. At this time, each battery system includes a separate control module 400, so that the battery system may be controlled independently.

An energy storage system according to the present disclosure includes the battery container according to the present disclosure described above. Moreover, the energy storage system according to the present disclosure may include two or more battery containers. In addition, the energy storage system according to the present disclosure may further include a control container for controlling various operations, such as charging and discharging operations of one or more battery containers, in addition to the battery container.

Meanwhile, in the present specification, the terms indicating directions such as "upper", "lower", "left", "right", "front", and "rear" may be used, but these terms are only for convenience of description, and it is obvious to those skilled in the art disclosure that these terms may vary depending on the location of a target object or the location of an observer. Also, in this specification, the terms such as "inside" or "outside" may be used for each component, and, unless otherwise specified, the "inside" may mean a direction toward the central portion in each component, and the "outside" may mean a direction opposite thereto.

### Reference Signs

100: container housing
101: upper housing, 102: lower housing, 103: left housing, 104: right housing, 105: front housing, 106: rear housing
200: battery module
300: support member
310: pillar portion, 320: seating portion, 330: plate portion
400: control module
G1~G3: insert groove

## Claims

1. A battery container, comprising:
a container housing (100) having a plurality of unit housings (101, 102, 103, 104, 105, 106) to form an empty space therein;
a plurality of battery modules (200) accommodated in the inner space of the container housing (100) and stacked in an upper and lower direction to form a module stack, so that a plurality of module stacks are arranged in a horizontal direction; and
a support member (300) configured to accommodate the plurality of battery modules (200) while supporting at least two unit housings therebetween,
wherein the container housing (100) includes an upper housing (101) and a lower housing (102) as the plurality of unit housings, and the support member (300) is configured to support the upper housing (101) and the lower housing (102) therebetween,
wherein the support member (300) includes two pillar portions (310) erected in the upper and lower direction and a seating portion (320) having both ends fastened to the two pillar portions (310) and configured such that the battery module (200) seats thereon;
**characterized in that** the support member (300) further includes a plate portion (330) connected between the two pillar portions (310) to block the space between the two pillar portions (310).

2. The battery container according to claim 1,
wherein the support member (300) is provided in plurality inside the container housing (100) so that the plurality of support members (300) are arranged to be spaced apart by a predetermined distance in the horizontal direction, and
one module stack is interposed between two adjacent support members (300).

3. The battery container according to claim 1,
wherein the seating portion (320) is provided in plurality so that the plurality of seating portions (320) are spaced apart by a predetermined distance in the upper and lower direction.

4. The battery container according to claim 1,
wherein the seating portion (320) is configured in a bent plate shape.

5. The battery container according to claim 1,
wherein the pillar portion (310) has a hollow (V1) formed therein.

6. The battery container according to claim 1,
wherein the plate portion (330) includes two plates spaced apart from each other.

7. The battery container according to claim 1,
wherein the pillar portion (310) has an insert groove (G3) formed so that the seating portion (320) is inserted and coupled therein.

8. An energy storage system, comprising the battery container according to any one of claims 1 to 7.

## Patentansprüche

1. Batteriebehälter, umfassend:
ein Behältergehäuse (100), welches eine Mehrzahl von Einheitsgehäusen (101, 102, 103, 104, 105, 106) aufweist, um einen freien Raum darin zu bilden;
eine Mehrzahl von Batteriemodulen (200), welche in dem inneren Raum des Behältergehäuses (100) aufgenommen sind und in einer oberen und unteren Richtung gestapelt sind, um einen Modulstapel zu bilden, so dass eine Mehrzahl von Modulstapeln in einer horizontalen Richtung angeordnet sind; und
ein Halterungselement (300), welches dazu eingerichtet ist, die Mehrzahl von Batteriemodulen (200) aufzunehmen, während es wenigstens zwei Einheitsgehäuse dazwischen haltert,
wobei das Behältergehäuse (100) ein oberes Gehäuse (101) und ein unteres Gehäuse (102) als die Mehrzahl von Einheitsgehäusen umfasst, und das Halterungselement (300) dazu eingerichtet ist, das obere Gehäuse (101) und das untere Gehäuse (102) dazwischen zu haltern,
wobei das Halterungselement (300) zwei Stützenabschnitte (310), welche in der oberen und unteren Richtung aufgerichtet sind, und einen Setzabschnitt (320) umfasst, welcher beide Enden aufweist, welche an den zwei Stützenabschnitten (310) befestigt sind und derart eingerichtet sind, dass das Batteriemodul (200) darauf sitzt;
**dadurch gekennzeichnet, dass** das Halterungselement (300) ferner einen Plattenabschnitt (330) umfasst, welcher zwischen den beiden Stützenabschnitten (310) verbunden ist, um den Raum zwischen den zwei Stützenabschnitten (310) zu blockieren.

2. Batteriebehälter nach Anspruch 1,
wobei das Halterungselement (300) in einer Mehrzahl in dem Behältergehäuse (100) bereitgestellt ist, so dass die Mehrzahl von Halterungselementen (300) angeordnet sind, um in der horizontalen Richtung um einen vorbestimmten Abstand beabstandet zu sein, und
wobei ein Modulstapel zwischen zwei benachbarten Halterungselementen (300) eingefügt ist.

3. Batteriebehälter nach Anspruch 1,
wobei der Setzabschnitt (320) in einer Mehrzahl bereitgestellt ist, so dass die Mehrzahl von Setzabschnitten (320) in der oberen und unteren Richtung um einen vorbestimmten Abstand beabstandet sind.

4. Batteriebehälter nach Anspruch 1,
wobei der Setzabschnitt (320) in einer gebogenen Plattenform eingerichtet ist.

5. Batteriebehälter nach Anspruch 1,
wobei der Stützenabschnitt (310) einen Hohlraum (V1) aufweist, welcher darin gebildet ist.

6. Batteriebehälter nach Anspruch 1,
wobei der Plattenabschnitt (330) zwei Platten umfasst, welche voneinander beabstandet sind.

7. Batteriebehälter nach Anspruch 1,
wobei der Stützenabschnitt (310) eine Einführnut (G3) aufweist, welche gebildet ist, so dass der Setzabschnitt (320) darin eingeführt und gekoppelt ist.

8. Energiespeichersystem, umfassend den Batteriebehälter nach einem der Ansprüche 1 bis 7.

## Revendications

1. Récipient de batterie, comprenant :
un boîtier de récipient (100) comportant une pluralité de boîtiers unitaires (101, 102, 103, 104, 105, 106) pour former un espace vide à l'intérieur ;
une pluralité de modules de batterie (200) logés dans l'espace interne du boîtier de récipient (100) et empilés dans une direction supérieure et inférieure pour former une pile de modules, de sorte qu'une pluralité de piles de modules soient agencées dans une direction horizontale ; et
un élément de support (300) configuré pour accueillir la pluralité de modules de batterie (200) tout en supportant au moins deux boîtiers unitaires entre eux,
dans lequel le boîtier de récipient (100) comporte un boîtier supérieur (101) et un boîtier inférieur (102) en tant que pluralité de boîtiers unitaires et l'élément de support (300) est configuré pour supporter le boîtier supérieur (101) et le boîtier inférieur (102) entre eux,
dans lequel l'élément de support (300) comporte deux parties de montant (310) érigées dans la direction supérieure et inférieure et une partie d'assise (320) ayant les deux extrémités fixées aux deux parties de montant (310) et configurée de sorte que le module de batterie (200) repose dessus ;
**caractérisé en ce que** l'élément de support (300) comporte en outre une partie de plaque (330) reliée entre les deux parties de montant (310) pour bloquer l'espace entre les deux parties de montant (310).

2. Récipient de batterie selon la revendication 1,
dans lequel l'élément de support (300) est prévu en pluralité à l'intérieur du boîtier de récipient (100) de sorte que la pluralité d'éléments de support (300) sont agencés pour être espacés d'une distance prédéterminée dans la direction horizontale, et
une pile de modules est interposée entre deux éléments de support (300) adjacents.

3. Récipient de batterie selon la revendication 1,
dans lequel la partie d'assise (320) est prévue en pluralité de sorte que la pluralité de parties d'assise (320) sont espacées d'une distance prédéterminée dans la direction supérieure et inférieure.

4. Récipient de batterie selon la revendication 1,
dans lequel la partie d'assise (320) est configurée sous forme de plaque courbée.

5. Récipient de batterie selon la revendication 1,
dans lequel la partie de montant (310) présente un creux (V1) formé dans celle-ci.

6. Récipient de batterie selon la revendication 1,
dans lequel la partie de plaque (330) comporte deux plaques espacées l'une de l'autre.

7. Récipient de batterie selon la revendication 1,
dans lequel la partie de montant (310) présente une rainure d'insertion (G3) formée de sorte que la partie d'assise (320) soit insérée et couplée dans celle-ci.

8. Système de stockage d'énergie, comprenant le récipient de batterie selon l'une quelconque des revendications 1 à 7.
